(19) **Europäisches Patentamt**
**European Patent Office**
**Office européen des brevets**

(11) **EP 1 646 686 B1**

(12) **EUROPEAN PATENT SPECIFICATION**

(45) Date of publication and mention
of the grant of the patent:
**10.12.2008 Bulletin 2008/50**

(51) Int Cl.:
***C08L 23/08*** *(2006.01)*

(21) Application number: **04711043.2**

(86) International application number:
**PCT/JP2004/001604**

(22) Date of filing: **13.02.2004**

(87) International publication number:
**WO 2004/104087 (02.12.2004 Gazette 2004/49)**

(54) **POLYMER COMPOSITION, PROCESS FOR PRODUCING THE POLYMER COMPOSITION, AND MOLDED ARTICLES FOR AUTOMOBILE EXTERIOR TRIM**

POLYMERZUSAMMENSETZUNG, VERFAHREN ZUR HERSTELLUNG DER POLYMERZUSAMMENSETZUNG UND FORMKÖRPER FÜR AUTOAUSSENVERKLEIDUNGSTEILE

COMPOSITION POLYMERE, SON PROCEDE DE PRODUCTION, ET ARTICLES MOULES POUR GARNITURE EXTERIEURE D'AUTOMOBILE

(84) Designated Contracting States:
**DE FR GB**

(30) Priority: **23.05.2003 JP 2003146277**
**29.05.2003 JP 2003152375**

(43) Date of publication of application:
**19.04.2006 Bulletin 2006/16**

(60) Divisional application:
**07023838.1 / 1 892 263**

(73) Proprietor: **Du Pont-Mitsui Polychemicals Co., Ltd.**
**Tokyo 105-7117 (JP)**

(72) Inventors:
• **NAKATA, Kazuyuki**
**2990125 Chiba (JP)**
• **SATO, Norihiko**
**Akita-shi**
**Akita (JP)**
• **MAEDA, Toshiyuki**
**2990124 Chiba (JP)**

• **BENDLER, Herbert Vernon**
**Delaware 19808 (US)**
• **WALSH, David James**
**Pennsylvania 19317 (US)**

(74) Representative: **Simons, Amanda Louise**
**J.A. Kemp & Co.,**
**14 South Square,**
**Gray's Inn**
**London WC1R 5JJ (GB)**

(56) References cited:
**US-A- 3 433 573      US-A- 3 555 110**
**US-A- 6 100 335      US-B1- 6 169 145**
**US-B1- 6 258 862**

• **PATENT ABSTRACTS OF JAPAN vol. 0103, no. 45 (C-386), 20 November 1986 (1986-11-20) & JP 61 148251 A (DU PONT MITSUI POLYCHEM CO LTD), 5 July 1986 (1986-07-05) cited in the application**

EP 1 646 686 B1

Printed by Jouve, 75001 PARIS (FR)

## EP 1 646 686 B1

**Description**

**FIELD OF THE INVENTION**

The present invention relates to a polymer composition having various good properties inherent in ethylene copolymers and flow properties suitable for molding processability, and also having improved heat resistance. It also relates to a process for producing the composition and molded articles for automobile exterior trim. More specifically, it relates to a polymer composition having excellent flow properties and productivity, which allow to produce molded articles having excellent heat resistance, good adhesion with paint, tensile strength, flexibility, molding processability, stress crack resistance and RF(radiofrequency) weldability. It also relates to a process for producing the polymer composition and molded articles for automobile exterior trim molded by the polymer composition.

**BACKGROUND OF THE INVENTION**

Ethylene copolymers have excellent properties, and have widely been used as various molding materials until now. Ethylene copolymers, however, have negative properties that they easily induce heat distortion under high temperature conditions because of a low softening point, and therefore, their use range is limited vastly.

When an ethylene copolymer having a relatively high melting point is used in consideration of heat resistance, the flexibility and good adhesion with paint are lowered. No ethylene copolymers so far can fulfill all of the excellent heat resistance, flexibility and good adhesion with paint.

Accordingly, as paintable resins for automotive exterior parts such as mud flaps or bumper protectors, expensive olefin thermoplastic elastomers or thermoplastic polyurethane resins are used. On this account, the advent of an ethylene copolymer having lower cost than these resins and also having both of excellent heat resistance and good adhesion with paint has been desired.

Under these circumstances, the blend of a resin having a high melting point such as polypropylene has been attempted to improve the heat resistance of the ethylene copolymers. In general, this approach leads to a result that not only sufficient heat resistance is not obtained but also the mechanical properties are lowered depending upon the inferior compatibility between the resins.

JP-B-1(1989)-26616 (Patent literature 1) disclosed a method of improving heat resistance by simultaneously melt-blending an ethylene copolymer, a peroxide-decomposing type olefin copolymer having a melt viscosity at 180°C of not more than 10,000 mPa·s and an organic peroxide.

The method, however, has a problem that during melt blend, cross-linking or side reaction such as lowering of molecular weight occurs so that it is difficult to control the fluidity of the polymer composition. Further, because of using the peroxide-decomposing type olefin copolymer having a melt viscosity at 180°C of not more than 10, 000 mPa·s, melt blend with an extruder is difficult and stable melt blend cannot be conducted.

JP-A-2001-31801 (Patent literature 2) disclosed an ethylene copolymer having excellent heat resistance obtainable by simultaneously melt blending an ethylene copolymer, a polypropylene wax having a number average molecular weight of not more than 50,000, an ethylene-radical decomposing type olefin copolymer having a number average molecular weight of not less than 100,000 and an organic peroxide.

The ethylene copolymer, however, has a problem in production technique such that the polypropylene wax is used and further a third component is necessary as a compatibilizer.

Sabu Thomas and Anne George disclosed dynamic mechanical properties of thermoplastic elastomers, made from blends of polypropylene with copolymers of ethylene with vinyl acetate, in European Polymer Journal (1992), 28 (11), 1451-8.

The abstract of this literature is as follows. Thermoplastic elastomers from blends of ethylene-vinyl acetate copolymer and polypropylene were prepared by melt blending on a Brabender Plasticorder. Dynamic mechanical properties such as storage modulus, loss modulus, and damping properties were studied over a wide range of temperatures. The effects of blend ratio and dynamic crosslinking of the elastomer phase on the dynamic mechanical properties were also investigated. The morphology of the blends was studied by SEM. Both microscopy and dynamic mechanical analysis indicate that the blends are immiscible and they have a 2-phase structure. Attempts were made to correlate the dynamic mechanical properties with the morphology of the system. Various composite models were used to fit the experimental viscoelastic data.

P.Cassagnau, M.Bert, V.Verney and A.Michel disclosed a rheological method for the study of crosslinking of ethylene -vinyl acetate and ethylene-acrylic ester copolymer in a polypropylene matrix in Polymer Engineering and Science (1992), 32(15), 998-1003.

The abstract of this literature is as follows. Transesterification may be used to crosslink copolymers in the presence of $Bu_2SnO$ as a catalyst. A rheological study was attempted to elucidate the mechanism of this exchange reaction, and the kinetics of the crosslinking reaction were determined by studying the time and temperature dependence

2

of the dynamic storage modulus. Kinetic curves obtained for crosslinking of ethylene vinyl acetate (EVA) polymer-Bu$_2$SnO blend, EVA-polypropylene blend, and EVA-Me acrylate-grafted polypropylene blend allowed to evaluate the activation energy of the reaction and, thus, to specify the appropriate parameters (temperature and time) for carrying out this reaction in the melt.

Sabu Thomas, B.R.Gupta and S.K.De disclosed tear and wear of thermoplastic elastomers from blends of polypropylene and ethylene vinyl acetate rubber in Journal of Materials Science (1987), 22(9), 3209-16.

The abstract of this literature is as follows. Tear and wear properties of the title thermoplastic rubbers were studied with special ref. to the effect of blend ratios and dynamic crosslinking of the rubber phase. Both tear and wear resistance of the composites increased with increasing proportion of the polypropylene (I) phase. Dynamic crosslinking of the blends containing higher proportion of the rubber phase (>60%) increased the wear and tear properties, but blends containing higher proportion of the plastic phase showed a decrease in properties due to the degradation of (I) phase. Attempts were made to correlate the changes in properties with the morphology of the system. In order to understand the mechanism of failure, the tear and wear fracture surfaces were examined by SEM. The fractographs were correlated with the strength and type of failure of these blends.

US 6,258,862 describes a composition including, by weight:

- from 40 to 80% of at least one uncrosslinked composition (A) including at least one polyolefin (PA);
- from 60 to 20% of at least one crosslinked composition (B) including at least one propylene polymer (PB) and at least one ethylene-vinyl acetate (EVA) copolymer.

The composition B has preferably been obtained beforehand by processing a composition including from 10 to 49% of at least one propylene polymer (PB), from 90 to 51% by weight of at least one ethylene-vinyl acetate copolymer, and from 100 to 1500 ppm by weight of at least one crosslinking agent.

The composition is said to find use in the manufacture of foam sheets for use in the motor vehicle industry, which are thermoformable, HF weldable and recyclable.

[Patent literature 1] JP-B-1(1989)-26616
[Patent literature 2] JP-A-2001-31801

## OBJECT OF THE INVENTION

The objectives of the invention are to provide a polymer composition having excellent fluidity and productivity, which allow to produce molded articles having excellent heat resistance, good adhesion with paint, tensile strength, flexibility, molding processability, stress crack resistance and RF weldability, and to provide a process for producing the polymer composition and molded articles for automobile exterior trim molded from the polymer composition.

The other object of the invention is to provide a polymer composition, which can easily be produced in a low cost, and a process for producing the polymer composition.

## SUMMARY OF THE INVENTION

The present inventors have earnestly studied to develop a polymer composition having all of excellent heat resistance, flexibility and good adhesion with paint, with keeping the flow properties inherent in ethylene polymers whose properties are suitable for molding processing. The inventors found that a resin of a specific ethylene copolymer and a resin of a specific two or more component propylene copolymer or a blend of the propylene copolymer and a propylene homopolymer are melt-blended in a specific proportion and dynamically cross-linked in the presence of an organic peroxide to obtain an aimed polymer composition. Thus, the present invention has been accomplished.

That is, the present invention provides a polymer composition comprising
30 to 75 % by weight of an ethylene-vinyl acetate copolymer (A1) containing units derived from vinyl acetate in an amount of not less than 6 % by weight and less than 20 % by weight,
5 to 30 % by weight of an ethylene-vinyl acetate copolymer (A2) containing units derived from vinyl acetate in an amount of not less than 20 % by weight and not more than 45 % by weight, and
10 to 50 % by weight of a resin (B) having a melt viscosity (JAI 7-1991) at 180°C of over 10,000 mPa·s and comprising a two or more component propylene copolymer component containing 0.1 to 20 % by mol of units derived from $\alpha$-olefins other than propylene, or a blend of a two or more-component propylene copolymer and a propylene homopolymer,
wherein at least one of the components (A1), (A2) and (B) is partially or completely cross-linked.

Typically, the polymer composition of the present invention is at least partially cross-linked and is obtainable by dynamically heat-treating:

30 to 75 % by weight of an ethylene-vinyl acetate copolymer (A1) containing units derived from vinyl acetate in an amount of not less than 6 % by weight and less than 20 % by weight,

5 to 30 % by weight of an ethylene-vinyl acetate copolymer (A2) containing units derived from vinyl acetate in an amount of not less than 20 % by weight and not more than 45 % by weight, and

10 to 50 % by weight of a resin (B) having a melt viscosity (JAI 7-1991) at 180°C of over 10,000 mPa·s and comprising a two or more component propylene copolymer containing 0.1 to 20 % by mol of units derived from $\alpha$-olefins other than propylene, or a blend of a two or more-component propylene copolymer and a propylene homopolymer

in the presence of an organic peroxide (C) in an amount of from 0.001 to 4.0 parts by weight based on 100 parts by weight of the total amount of the resins (A1), (A2) and (B).

The process for producing a polymer composition according to the present invention comprises dynamically heat-treating:

30 to 75% by weight of an ethylene-vinyl acetate copolymer (A1) containing units derived from vinyl acetate in an amount of not less than 6% by weight and less than 20% by weight,

5 to 30% by weight of an ethylene-vinyl acetate copolymer (A2) containing units derived from vinyl acetate in an amount of not less then 20% by weight and not more than 45% by weight, and

10 to 50 % by weight of a resin (B) having a melt viscosity (JAI 7-1991) at 180°C of over 10,000 mPa·s and comprising a two or more-component propylene copolymer comprising 0.1 to 20 % by mol of units derived from $\alpha$-olefins other than propylene, or a blend of the two or more-component propylene copolymer and a propylene homopolymer,

in the presence of an organic peroxide (C) in an amount of from 0.001 to 4 parts by weight based on 100 parts by weight of the total amount of the resins (A1),(A2) and (B).

## DETAILED DESCRIPTION OF THE PRESENT INVENTION

The polymer composition, the process for producing the composition and the automobile exterior molded articles obtained by molding the polymer composition will be described in detail herein after.

In the first place, components used in the polymer composition of the present invention are described.

Resin (A)

(Meth)acrylate esters are copolymerizable with ethylene and vinyl actate in the copolymer (A1) or (A2). Example include methyl acrylate, ethyl acrylate, isobutyl acrylate, n-butyl acrylate, iso-octyl acrylate, methyl methacrylate, ethyl methacrylate, isobutyl methacrylate, n-butyl methacrylate, iso-octyl methacrylate, . Among those, methyl acrylate, ethyl acrylate, isobutyl acrylate and n-butyl acrylate are preferred.

The above described ethylene -vinyl acetate compolymer (A1) or (A2) may be a three or more-component copolymer. An example of such a multi-component copolymer is the three-component copolymer ethylene-vinyl acetate-carbon monoxide copolymer.

In this multi-component embodiment, other components may be copolymerized with ethylene and vinyl acetate without missing the object of the present invention.

Examples of the other components are:

vinyl esters such as vinyl propionate, vinyl n-butyrate, vinyl versate, vinyl laurate, vinyl stearate, vinyl benzoate, vinyl salicylate, vinyl cyclohexane carboxylate;

unsaturated carboxylic acids such as ethacrylic acid, maleic acid, fumaric acid, itaconic acid, anhydrous maleic acid, anhydrous itaconic acid, monomethyl maleate, monoethyl maleate;

unsaturated carboxylates such as dimethyl maleate, diethyl maleate;

unsaturated hydrocarbons such as propylene, butene, 1,3-butadiene, pentene, 1,3-pentadiene, 1-hexene, 3-hexene, 1-octene, 4-octene;

acid compounds such as vinyl sulfate, vinyl nitrate;

halides such as vinyl chloride, vinyl fluoride, vinyl iodide;

vinyl-containing primary and secondary amine compounds and amide compounds; and sulfur dioxide.

In the polymer composition according to the present invention, an ethylene-vinyl acetate copolymer (A1) containing units derived from vinyl acetate in an amount of not less than 6 % by weight and less than 20 % by weight, and an ethylene-vinyl acetate copolymer (A2) containing units derived from vinyl acetate in an amount of not less than 20 % by weight and not more than 45 % by weight are preferably used as a resin .

That resin usually has a melt flow rate (JIS K7210-1999, 190°C, 2160 g load) of from 0.1 to 300 g/10 min, preferably 0.2 to 250 g/10 min, more preferably 0.5 to 200 g/10 min.

The ethylene-vinyl acetate copolymer (A1) has a content of units derived from vinyl acetate (hereinafter, referred to as vinyl acetate content) of not less than 6 % by weight and less than 20 % by weight, preferably not less than 7 % by weight and not more than 18 % by weight, more preferably not less than 8 % by weight and not more than 15 % by weight.

The ethylene-vinyl acetate copolymer (A2) has a vinyl acetate content of not less than 20 % by weight and not more than 45 % by weight, preferably not less than 25 % by weight and not more than 40 % by weight, more preferably not less than 28 % by weight and not more than 38 % by weight.

In general, when the ethylene-vinyl acetate copolymer has a lower content of vinyl acetate, the heat resistance is improved but the flexibility is spoiled, and the adhesion with paint and impact resistance at low temperatures are liable to be lowered. On the other hand, when the ethylene-vinyl acetate copolymer has a higher content of vinyl acetate, the flexibility and adhesion with paint are improved, but the heat resistance and molding processability are liable to be lowered.

Using the copolymers (A1) and (A2) having the vinyl acetate contents in the above range, a polymer composition having excellent heat resistance, good adhesion with paint and molding processability can be obtained.

The copolymer (A1) is used in an amount of from 30 to 75 % by weight, preferably 35 to 70 % by weight, more preferably 40 to 65 % by weight based on 100 % by weight of the total amount of the components (A1), (A2) and (B).

The copolymer (A2) is used in an amount of from 5 to 30 % by weight, preferably 8 to 29 % by weight, more preferably 10 to 28 % by weight based on 100 % by weight of the total amount of the components (A1), (A2) and (B).

Using the copolymers (A1) and (A2) in the above amount range, the heat resistance, adhesion with paint and molding processability of the resulting polymer composition can be improved more remarkably.

Additionally, the vinyl acetate content in all the resulting polymer composition is desirably not less than 8 % by weight. When the vinyl acetate content in the resulting polymer composition is less than 8 % by weight, the adhesion with paint is lowered, the resulting molded article becomes harder and the stress crack resistance is also lowered. On this account, the amounts of the components (A1), (A2) and (B) are preferably regulated within the above amount ranges in order that the vinyl acetate content in the polymer composition is not less than 8 % by weight.

The copolymers (A1) and (A2) each have a melt flow rate (JIS K7210-1999, 190°C, 2160 g load) of usually from 5 to 50 g/10 min, preferably 10 to 40 g/10 min.

Resin (B)

The resin (B) used in the present invention comprises a two or more-component propylene copolymer, or a blend of this propylene copolymer and a propylene homo-polymer.

In the two or more-component propylene copolymer, the components capable of polymerizing with propylene are, for example, ethylene, or $\alpha$-olefins having 4 to 20 carbon atoms such as 1-butene, 1-hexene, 1-pentene, 1-heptene, 1-octene 4-methyl-1-pentene, . These components may be used singly or in combination with two or more. The two or more-component copolymer used in the present invention may be a random copolymer or a block copolymer and, further, a random copolymer is preferable in particular.

Examples of the two or more-component propylene copolymer may include two component propylene copolymers such as propylene/ethylene random copolymer or propylene/ethylene block copolymer, propylene/1-butene random copolymer or propylene/1-butene block copolymer, propylene/4-methyl-1-pentene random copolymer or propylene/4-methyl-1-pentene block copolymer ; and three component propylene copolymers such as propylene/1-butene/ethylene random copolymer or propylene/1-butene/ethylene block copolymer . Of these, propylene/1-butene/ethylene random copolymer is most preferred.

The propylene copolymer has a content of units derived from components other than propylene, for example, $\alpha$-olefin units, of from 0.1 to 20 mol%, preferably 0.2 to 18 mol%, more preferably 0.5 to 15 mol%.

The resin (B) used in the present invention has a melt viscosity (JAI 7-1991) at 180°C of over 10,000 mPa·s , preferably not less than 100,000 mPa·s, more preferably not less than 1,000,000 mPa·s. When the resin (B) has a melt viscosity in the above range, the cross-linking reaction with an extruder is carried out stably and also a polymer composition having a stable morphology can be obtained.

Further, the resin (B) used in the invention has a melting point of not lower than 120°C, a melt flow rate (ASTM D 1238, 230°C, 2160 g load) of from 1 to 50 g/10 min, preferably 2 to 45 g/10 min, more preferably 3 to 40 g/10 min. When the resin (B) has an MFR in the above range, polymer compositions having excellent processing properties and also excellent basic physical properties such as tensile strength at break, tensile elongation at break and other tensile properties can be obtained.

The resin (B) is used in an amount of from 5 to 50 % by weight, preferably 7 to 47 % by weight, more preferably 10 to 45 % by weight based on 100 % by weight of the total amount of the resin (A) and the resin (B).

Organic peroxide (C)

In the present invention, it is preferred to use an organic peroxide (C) as a cross-linking agent.

Examples of the organic peroxide (C) may include dicumyl peroxide, di-tert-butyl peroxide, 2,5-dimethyl-2,5-di-(tert-butylperoxy)hexane, 2,5-dimethyl-2,5-di(tert-butyl peroxy)hexyne-3, 1,3-bis(tert-butyl peroxyisopropyl) benzene, 1,1-bis(tert-butylperoxy)-3,3,5-trimethyl cyclohexane, n-butyl-4,4-bis(tert-butylperoxy)valerate, benzoyl peroxide, p-chlorobenzoyl peroxide, 2,4-dichlorobenzoyl peroxide, tert-butyl peroxy benzoate, tert-butyl peroxy isopropyl carbonate, diacetyl peroxide, lauroyl peroxide, tert-butyl cumyl peroxide, tert-butylperoxy-2-ethyl hexanoate.

Of these, in point of odor properties and scorch stability, 2,5-dimethyl-2,5-di-(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethyl cyclohexane, n-butyl-4,4-bis(tert-butylperoxy)valerate and tert-butylperoxy-2-ethyl hexanoate are preferred, and further, 2,5-dimethyl-2,5-di-(tert-butyl peroxy)hexane and tert-butylperoxy-2-ethyl hexanoate are most preferred.

The organic peroxide (C) is used in an amount of from 0. 001 to 4 parts by weight, preferably 0.001 to 3 parts by weight, more preferably 0.01 to 2.5 parts by weight, most preferably 0.01 to 2.0 parts by weight based on 100 parts by weight of the total amount of the resin (A) and the resin (B). Using the organic peroxide (C) in the above amount, polymer compositions having excellent fluidity and molding processability are obtained. From the polymer compositions, molded articles having excellent heat resistance, flexibility, adhesion with paint and appearance can be obtained.

Component (D)

In the preparation of the polymer compositions of the present invention (namely, before the dynamic heat-treatment or under the dynamic heat-treatment), or after the dynamic heat treatment, a graft-modified polyolefin may be optionally added as a component (D).

The component (D) optionally used in the present invention is a polyolefin graft-modified with an unsaturated carboxylic acid or acid anhydride thereof. Examples thereof may include unsaturated carboxylic acid graft modified polyolefins such as maleic acid-graft modified polyethylene, itaconic acid-graft modified polyethylene; and unsaturated carboxylic acid anhydride-graft modified polyethylene such as anhydrous maleic acid-graft modified polyethylene, anhydrous itaconic acid-graft modified polyethylene.

Examples of unsaturated carboxylic acid or acid anhydride thereof as a graft monomer may include acrylic acid, methacrylic acid, ethacrylic acid, maleic acid, fumaric acid, itaconic acid, anhydrous maleic acid, anhydrous itaconic acid.

The graft modified polyolefin (D) is used in an amount of from 0 to 20 parts by weight, preferably 1 to 20 parts by weight based on 100 parts by weight of the total amount of resin comprising components (A1) and (A2), the resin (B) and the graft modified polyolefin (D). Using the component (D) in an amount of from 3 to 10 parts by weight based on 100 parts by weight of the total amount of a resin containing components (A1) and (A2), the resin (B) and the component (D), polymer compositions having excellent balance between flexibility and heat resistance can be obtained.

Component (E)

In the preparation of the polymer compositions of the present invention (namely, before the dynamic heat-treatment or under the dynamic heat-treatment), or after the dynamic heat treatment, a thermoplastic elastomer may be optionally added as a component (E).

As the component (E) optionally used in the present invention, conventionally known olefin rubbers (olefin elastomers), and styrene block copolymers and hydrides thereof can be used.

Examples of the olefin rubbers (elastomers) are ethylene/$\alpha$-olefin copolymer rubber, propylene/$\alpha$-olefin copolymer rubber, ethylene/propylene/diene copolymer rubber. As the $\alpha$-olefin described above, $\alpha$-olefins having 3 to 12 carbon atoms are preferred.

Examples of the styrene block copolymers and hydrides thereof are styrene-butadiene-styrene block copolymer (SBS), its hydride, i.e. styrene-ethylene/butylenes-styrene block copolymer (SEBS), styrene-isoprene-styrene block copolymer (SIS), its hydride, i.e. styrene-ethylene/propylene-styrene block copolymer (SEPS), styrene-ethylene-ethylene/propylene- styrene block copolymer (SEEPS).

The thermoplastic elastomer (E) has a melt flow rate (MFR; ASTM D 1238, 190°C, 2160 g load) of from 0.1 to 300 g/10 min, preferably 0.2 to 250 g/10 min, more preferably 0.5 to 200 g/10 min.

The thermoplastic elastomer (E) is used in an amount of from 0 to 20 parts by weight, preferably 1 to 20 parts by weight based on 100 parts by weight of the total amount of a resin comprising components (A1) and (A2), the resin (B) and thermoplastic elastomer (E). Particularly, using the component (E) in an amount of from 3 to 20 parts by weight based on 100 parts by weight of the total amount of a resin comprising components (A1) and (A2), the resin (B) and the component (E), polymer compositions having excellent balance between flexibility and heat resistance can be obtained.

Component (F)

In the preparation of the polymer compositions of the present invention (namely, before the dynamic heat-treatment or under the dynamic heat-treatment), or after the dynamic heat treatment, an inorganic compound may be optionally added as a component (F).

Examples of the component (F) optionally used in the present invention may include a hydroxide (F1), carbonate (F2), silicate (F3), sulfate (F4), nitride (F5), carbon black (F6) and graphite (F7).

Examples of the hydroxide (F1) are calcium hydroxide, magnesium hydroxide, aluminum hydroxide, basic magnesium carbonate.

Examples of the carbonate (F2) are calcium carbonate, magnesium carbonate, aluminum carbonate, zinc carbonate, barium carbonate, dosonite, hydrotarsite.

Examples of the silicate (F3) are magnesium silicate, aluminum silicate, calcium silicate (wollastonite, xonotlight), talc, clay, mica, montmorillonite, bentonite, activated clay, sepiolite, imogolite, sericite, glass fiber, glass bead, silica balloon.

Examples of the sulfate (F4) are calcium sulfate, barium sulfate, gypsum fiber.

Examples of the nitride (F5) are aluminum nitride, boron nitride, silicon nitride.

As the carbon black (F6), conventionally known carbon blacks can be used and examples thereof are carbon black such as SRF, GPF, FEF, HAF, ISAF, SAF, FT, MT and compounds prepared by surface-treating these carbon blacks with a silane coupling agent.

In the present invention, the hydroxide (F1), carbonate (F2) and silicate (F3) are preferred, and the hydroxide (F1) is particularly preferred. Furthermore, in consideration of improving the dispersibility and safety, the surface of the inorganic compound may be coated with higher fatty acid, phosphate ester, various kinds of silane coupling agents, metal salt, silicon polymer, , and further, two or more kinds of inorganic compounds having different surface treating agents may be blended.

Of the inorganic compounds (F), as the inorganic flame retarder (F)' imparting flame retardant properties, conventionally known flame retarders can be used and examples thereof are magnesium hydroxide, aluminum hydroxide, hydrotarsite, basic magnesium carbonate, calcium carbonate, metal silicate, metal borate, silica, alumina, talc, clay, zeolite, and carbon black.

In consideration of improving the dispersibility and safety, the surface of the flame retarder may be coated with higher fatty acid, phosphate ester, various kinds of silane coupling agents, metal salt, silicon polymer, , and further, two or more kinds of flame retarders having different surface treating agents may be blended. Additionally, bromine type flame retarders such as tetra-bromo bisphenol A, deca-bromo diphenyl ether and chlorine type flame retarders such as chlorinated paraffin may be simultaneously used.

The composition of the present invention has excellent filling properties for the inorganic compounds. In the present invention, the inorganic compound (F) is used in an amount of from 0 to 250 parts by weight, preferably 10 to 100 parts by weight based on 100 parts by weight of the above polymer composition. When the inorganic compound (F) is contained in the above amount, polymer compositions having excellent heat resistance can be obtained.

The compositions composed of only a resin comprising components (A1) and (A2) and the inorganic compound (F) have good tensile properties and flexibility, but have lower heat resistance. The compositions composed of only the resin (B) and the inorganic compound (F) have good heat resistance, but have lower tensile properties. The compositions composed of only a resin comprising components (A1) and (A2), the resin (B) and the inorganic compound (F) have good flexibility, but have lower heat resistance and tensile properties.

In the ethylene copolymer composition prepared by using the inorganic flame retarder (F)', the flame retarder is used in an amount of from 0 to 250 parts by weight, preferably 75 to 250 parts by weight, more preferably 100 to 250 parts by weight based on 100 parts by weight of the above polymer composition. When the flame retarder (F)' is used in the above amount, polymer compositions having excellent flame retardant properties can be obtained.

Other components

In the preparation of the polymer compositions of the present invention (namely, before the dynamic heat-treatment or under the dynamic heat-treatment), or after the dynamic heat treatment, conventionally known additives can optionally be added within not missing the object of the present invention. Examples of the additives are a cross-linking co-agent, a mineral oil softener, plasticizer, filler, antioxidant, light stabilizer, UV absorber, processing aid, colorant, flame retarding assistant, copper damage inhibitor, heat stabilizer, antibacterial agent, antifungal agent, antistatic agent, foaming agent, foaming assistant, slip agent (lubricant),.

Examples of the cross-linking co-agent may include quinone oximes such as p-quinone dioxime, p,p-dibenzoyl quinone oxime; (meth) acrylates such as lauryl (meth) acrylate, ethylene glycol acrylate, ethylene glycol dimethacrylate, trimethylol propane trimethacrylate, triethylene glycol dimethacrylate; allyls such as diallyl fumarate, triallyl cyanurate, triallyl isocyanurate (TAIC), diallyl phthalate; maleimides such as aleimide, phenyl maleimide; sulfur; anhydrous maleic acid; itaconic acid; divinyl benzene; vinyl toluene; 1,2-polybutadiene, .

The cross-linking co-agent is used in an amount of from 0 to 4 parts by weight, preferably 0. 001 to 4 parts by weight, more preferably 0.01 to 2.5 parts by weight based on 100 parts by weight of the total amount of a resin comprising components (A1) and (A2) and the resin (B). Using the cross-linking co-agent in the above amount range, the resulting polymer compositions can maintain flow properties suitable for molding processing, which are inherent in ethylene copolymers.

Examples of the mineral oil softener are paraffin type or naphthene type process oils. Using the paraffin type process oil having a viscosity at 40°C of from 300 to 1000 mPa·s, occurrence of bleeding phenomenon can be prevented. The mineral oil softener is desirably used in an amount of from 0.1 to 10 parts by weight, preferably 0.2 to 8 parts by weight based on 100 parts by weight of the total amount of a resing comprising components (A1) and (A2) and the resing (B).

In the polymer composition of the present invention, it is effective to add the plasticizer (oil) in order to further improve the flexibility and the flex resistance.

Examples of the plasticizer optionally used in the present invention may include:

mineral oil type softeners such as process oil, extender oil;

aromatic ester type plasticizers, e. g. phthalate esters such as diethyl phthalate, dibutyl phthalate, di-n-octyl-phthalate, di(2-ethyhexyl)phthalate, diisononyl phthalate, diisodecyl phthalate, diundecyl phthalate, dilauryl phthalate, butyl lauryl phthalate, butyl benzyl phthalate, , trimellitate esters such as octyl trimellitate, isononyl trimellitate, isodecyl trimellitate, and pyromellitate esters such as octylpyromellitate ;

aliphatic ester type plasticizers such as dimethyl adipate, di-isobutyl adipate, di-n-butyl adipate, di-octyl-adipate, di (2-ethyl-hexyl)adipate, di-isodecyladipate, di-octyl azelate, di(2-ethylhexyl)azelate, di(2-ethylhexyl)sebacate, methyl acetyl ricinoleate, dipenta-erythritol ester;

glycol ester type plasticizers such as polyethylene glycol ester;

epoxy type plasticizers such as epoxidized soybean oil, epoxidized linseed oil, epoxidized aliphatic acid alkyl ester; and

phosphate ester type plasticizers such as trimethyl phosphate, triethyl phosphate, tributyl phosphate, tri(2-ethylhexyl) phosphate, trilauryl phosphate, tricetyl phosphate, tristearyl phosphate, trioleyl phosphate, tributoxy ethyl phosphate, tris-chloroethyl phosphate, tris-dichloropropyl phosphate, triphenyl phosphate, tricresyl phosphate, cresyl diphenyl phosphate, xylenyl diphenyl, 2-ethylhexyl diphenyl phosphate, condensed phosphate ester.

Of these, it is most preferred to use the aromatic ester type plasticizers. The plasticizer is desirably used in an amount of from 0.1 to 10 parts by weight, preferably 0.2 to 8 parts by weight based on 100 parts by weight of the total amount of a resin comprising components (A1) and (A2) and the resin (B).

As the antioxidant, any of conventionally known phenol type, sulfur type and phosphorus type antioxidants may be blended.

Examples of the phenol type antioxidant are 2,6-di-t-butyl phenol, 2, 6-di-t-butyl-p-cresol, 2-t-butyl-4,6-dimethyl phenol, 2,6-di-t-butyl-4-ethyl phenol, 2,6-di-t-butyl-4-n-butyl phenol, 2,6-di-isobutyl-4-n-butyl phenol, 2,6-di-cyclopentyl-4-methyl phenol, 2-(α-methylcyclohexyl)-4,6-dimethyl phenol, 2,6-di-octadecyl-4-methyl phenol, 2,4,6-tri-cyclohexyl phenol, 2,6,-di-t-butyl-4-methoxy methylphenol, n-octadecyl-β-(4'-hydroxy-3',5'-di-t-butylphenol)propiona te, 2,6-diphenyl-4-octadecyloxy phenol, 2,4-bis-n-(octylthio)-6-(4-hydroxy-3,5-di-t-butylanilino) - 1,3,5-triazine, 2,4,6-tris(3',5'-di-t-butyl-4'-hydrpxybenzylthio)-1,3,5-triazine, 2,6-di-t-butyl-4-methoxy phenol, 2,5-di-t-butyl hydroquinone, 2,5-di-t-amyl hydroquinone, 2,2'-thio-bis-(6-t-butyl-4-methylphenol), 2,2'-thio-bis-(4-octylphenol), 2,2'-thio-bis-(6-t-butyl-3-methylphenol), 4,4'-thio-bis-(6-t-butyl-2-methylphenol), 2,2'-methylene-bis-(6-t-butyl-4-methylphenol), 2,2'-methylene-bis-(6-t-butyl-4-ethylphenol), 2,2'-methylene-bis-{4-methyl-6-(α-methylcyclohexyl)-phenol}, 2,2'-methylene-bis-(4-methyl-6-cyclohexyl phenol), 2,2'-methylene-bis-(6-nonyl-4-methyl phenol), 2,2'-methylene-bis-{6-(α-methylbenzyl)-4-nonyl phenol}, 2,2'-methylene-bis-{6-(α,α-dimethylbenzyl)-4-nonyl phenol}, 2,2'-methylene-bis-(4,6-di-t-butyl phenol), 2,2'-ethylidene-bis-(4,6-di-t-butyl phenol), 2,2'-ethylidene-bis-(6-t-butyl-4-isobutyl phenol), 4,4'-methylene-bis-(2,6-di-t-butyl phenol), 4,4'-methylene-bis-(6-t-butyl-2-methyl phenol), 4,4'-butylidene-bis-(6-t-butyl-2-methyl phenol), 4,4'-butylidene-bis-(6-t-butyl-3-methyl phenol), 4,4'-butylidene-bis-(2,6-di-t-butyl phenol), 4,4'-butylidene-bis-(3,6-di-t-butyl phenol), 1,1-bis-(5-t-butyl-4-hydroxy-2-methyl phenyl)-butane, 2,6-di-(3-t-butyl-5-methyl-2-hydroxy benzyl)-4-methyl phenol, 1,1,3-tris-(5-t-butyl-4-hydroxy-2-methyl phenyl)-butane, bis{3,3-bis(4'-hydroxy-3'-t-butyl phenyl)butyric acid} ethylene glycol ester, di-(3-t-butyl-4-hydroxy-5-methyl phenyl)-dicyclopentadiene, di-{2-(3'-t-butyl-2'-hydroxy-5'-methyl benzyl)-6-t-butyl -4-methyl phenyl}terephthalate, 1,3,5-trimethyl-2,4,6-tris(3,5-di-t-butyl-4-hydroxybenzyl ) benzene, 1,3,5-tris-(3,5-di-t-butyl-4-hydroxybenzyl)isocyanurate, 1,3,5-tris-(4-t-butyl-3-hydroxy-2,6-dimethylbenzyl) isocyanurate, 1,3,5-tris-{(3,5-di-t-butyl-4-hydroxyphenyl)propionyl oxyethyl}isocyanurate, tetrakis{methylene-3-(3',5'-di-t-butyl-4'-hydroxyphenyl) propionate}methane.

These phenol type antioxidants may be used alone or in combination with two or more.

Examples of the phosphoric acid type antioxidant may include distearyl-pentaerythritol-diphosphite, tetrakis (2,4-di-t-butyl phenyl)-4,4'-biphenylene-diphosphite, bis(2,4-di-t-butylphenyl)pentaerythritol-diphosphite, bis(2,6-di-t-butyl-4-methyl phenyl)pentaerythritol-diphosphite, bis(2,6-di-t-butyl-4-n-octadecyl oxycarbonyl ethyl-phenyl) pentaerythritol-diphosphite, tris(2,4-di-t-butyl phenyl)phosphite, 2,2-methylenebis(4,6-di-t-butylphenyl)octyl phosphite.

These phosphoric acid type antioxidants may be used singly or in combination with two or more.

Examples of the sulfur type antioxidant may include dilauryl-3,3'-thiodipropionate, 4,4'-thiobis(6-t-butyl-3-methylphenol), dimyristyl-3,3'-thiodipropionate, distearyl-3,3'-thiodipropionate, pentaerythritol-tetrakis(3-lauryl thiopropionate).

These sulfur type antioxidants may be used singly or in combination with two or more.

Further, the phenol type, phosphorus type or sulfur type antioxidants may be used singly or in combination with two or more.

In addition to the above antioxidants, 4,6-bis(octyl thiomethyl-o-cresol [Trade Mark IRGSTAB CABLE KV10 manufactured by Ciba Speciality Chemicals Co.,] is exemplified.

Examples of the light stabilizer may include conventionally known light stabilizers, e.g. a hindered amine type light stabilizer (HALS).

Specific examples of the hindered amine type light stabilizer may include tetrakis-(1,2,2,6,6-pentamethyl -4-piperidine)-1,2,3,4-butane tetra-carboxylate, CHIMASSORB 944 [Trade Mark manufactured by Ciba Speciality Chemicals Co.,] and FLAMESTAB NOR 116[Trade Mark manufactured by Ciba Speciality Chemicals Co., NOR type hindered amine].

Examples of the UV absorber may include conventionally known UV absorbers, i.e. TINUVIN 326 [Trade Mark manufactured by Ciba Speciality Chemicals Co.,], TINUVIN 327 [Trade Mark manufactured by Ciba Speciality Chemicals Co.,] and TINUVIN 120 [Trade Mark manufactured by Ciba Speciality Chemicals Co.,].

Examples of the processing aid may include conventionally known processing aid, i.e. higher fatty acids such as ricinoleic acid, stearic acid, palmitic acid, lauric acid; higher fatty acid salts such as barium stearate, zinc stearate, calcium striate; and higher fatty acid esters such as esters of ricinoleic acid, stearic acid, palmitic acid or lauric acid.

Process for producing polymer composition

In one embodiments, a composition of the present invention, as described above, is prepared by dynamically heat-treating (namely melt blending) a resin comprising components (A1) and (A2) and the resing (B) in the presence of the organic peroxide (C). The polymer composition of the present invention may also prepared by dynamically heat-treating (namely melt blending) a resin comprising components (A1) and (A2) and the resin (B) in the presence of the organic peroxide (C) with additives such as mineral oil type softener, antioxidant, cross-linking agent.

Examples of a melt-blend machine are single screw extruder, twin screw extruder, Banbury mixer, pressure kneader and roll mill. Of these, it is particularly preferred to use the single screw extruder and twin screw extruder.

The melt-blend is generally carried out at a temperature of from 120 to 250°C for a period of time from 30 sec to 30 min. The dynamic heat treatment (melt-blend) is preferably carried out in an atmosphere of an inert gas such as nitrogen gas, and carbon dioxide gas.

Accordingly, the polymer composition thus obtainable comprises a resin comprising components (A1) and (A2) and the resin (B) as essential components and at least one of the resin (A) and the resin (B) is partially or completely (highly) cross-linked.

In the present invention, the condition "partially or completely (highly) cross-linked" means that the reduction rate of the melt flow rate (MFR; JIS K7210-1999, 190°C, 2160 g load) after/before the heat treatment (cross-linking) of the two-component polymer composition composed of a resin comprising components (A1) and (A2) and the resin (B) is not less than 20%, preferably from 20% to 99%. The MFR reduction rate is determined by the following equation:

$$([\text{I}]-[\text{II}]) \times 100 \ (\%) \ / \ [\text{I}]$$

wherein [I] is MFR before the heat treatment (cross linking) of two-component polymer composition composed of a resin comprising components (A1) and (A2) and the resin(B), and [II] is MFR after the heat treatment (cross linking) of two-component polymer composition composed of a resin comprising components (A1) and (A2) and the resin(B).

When the degree of cross-linking of the resulting polymer composition is too low, the control of morphology is incomplete and thereby the tensile strength remarkably lowers or the desired heat resistance is not obtained.

The polymer composition thus prepared according to the present invention has a melt flow rate (JIS K7210-1999, 190°C, 2160 g load) of usually not less than 0.1 g/10 min, preferably from 0.2 to 30 g/10 min.

Further, in the present invention, 0 to 100 parts by weight of a polyolefin resin may optionally be mixed with 100 parts by weight of the partially or completely (highly) cross-linked polymer composition.

Examples of the polyolefin resin optionally mixed after the dynamic heat-treatment in the present invention are resinous polymers which comprise a homopolymer of 1-olefin such as ethylene, propylene, 1-butene, 1-hexene, 4-methyl-1-pentene, , a copolymer thereof, a copolymer of $\alpha$-olefin and not more than 15 mol% of other polymerizable monomer, such as ethylene-vinyl acetate copolymer, ethylene-acrylic acid copolymer, ethylene-methyl acrylate copolymer, ethylene-ethyl acrylate, ethylene-methacrylic acid copolymer, ethylene-methyl methacrylate copolymer. The polyolefin resins have a melt flow rate (ASTM D1238-65T, 190°C, provided that that of propylene polymer is 230°C) of preferably from 5 to 100 g/10 min, particularly preferably 10 to 50 g/10 min.

Molded articles for automobile exterior trim

The molded articles for automobile exterior trim of the present invention can be molded using the polymer compositions thus obtained by known molding processes such as extrusion molding, injection molding, and compression molding. Examples of the molded articles for automobile exterior trim of the present invention may include mud flaps, bumper protectors, and spats.

The molded articles for automobile exterior trim of the present invention have both of excellent heat resistance and good adhesion with paint, and also have excellent mechanical strength, flexibility, stress crack resistance and RF weldability because they are molded by the above polymer compositions.

Other uses

In addition of the above molded articles for automobile exterior trim, the polymer compositions of the present invention are widely applied for uses in need of heat resistance and tensile properties such as packagings, sealant materials, hoses, films, tapes, sheets, injection molded articles, fibers, fabrics, non-woven fabrics, containers and uses in need of calender molding properties, RF weldability and heat resistance such as building sheets.

Specific uses are daily necessaries such as covers used for agriculture and gardening, covers for covering, pouches for cards or commuter passes, pouches for small articles, files or bags for address books, cases for postcards, pouches for envelopes and writing papers, cases for office machinery, bags for goods, traveling bags, shopping bags, shoes or carpet for bath room, shades for balcony, rain coats, fence for oil, ticket cases, notebook cases, bands, covers for bedclothes, cosmetic pouches, apron, pouches for tobacco, covers for telephone book, cleaning bags, saddle covers for bicycle;

interior and exterior materials for automobile such as linings for automobile, mats for automobile, covers for automobile, sun visors, braid materials for automobile;

electric and electronic materials such as tapes and films for semi-conductor, e.g. dicing tape base materials, back grind films, , marking films, IC carrier tapes, taping tape for electronic parts;

building materials such as wall paper, mats, flooring;

food packaging materials; sanitary materials; inner bags for flexible containers; containers; dust free films; antifouling films, bags for treating radioactive substances; cloth for guarding radiation; films and sheets for clean room; curtain for partition;

wire or cable application, including communication cable, electric power cable, electric home appliance code, wiring in devices and shrink tube

The polymer compositions of the present invention may be used in a form laminated with other resins, or other materials. Further, a pressure-sensitive adhesive may optionally apply on the surfaces of the molded articles of the polymer compositions of the present invention.

**EFFECT OF THE INVENTION**

The present invention provides polymer compositions which have excellent fluidity and productivity, and are moldable into articles having heat resistance, good adhesion with paint, tensile strength, flexibility, stress crack resistance, and RF weldability, and can also provide a process for producing the polymer compositions. Further, the present invention provides polymer compositions which obtainable easily and economically, and a process for producing the polymer composition.

Additionally, according to the present invention, molded articles for automobile exterior trim having excellent heat resistance, adhesion with paint, mechanical strength, flexibility, stress crack resistance, appearance and RF weldability are obtainable by molding the polymer compositions of the present invention.

## EXAMPLES

The present invention is described with reference to the following examples hereinafter, but it should be not limited by the examples.

With regard to the molded articles of the thermoplastic elastomer composition shown in Examples and Comparative Examples, tests, measurements and evaluation on melt flow rate (MFR), stiffness, hardness (Shore A and Shore D), flexural modulus, tensile strength at break, tensile elongation at break, stress crack resistance, sag deformation, heat resistance, and appearance and adhesion with paint of injection molded articles were carried out in the following methods.

(1) Melt flow rate

The melt flow rate (MFR) of the polymer composition was measured at 190°C under a load of 2160 g in accordance with JIS K7210-1999.

(2) Stiffness (Olsen type)

The stiffness was measured in accordance with JIS K 7106.

(3) Hardness (Shore hardness A and D)

The hardness (Shore hardness A and D) was measured using a 3 mm injection plate in accordance with JIS K7215.

(4) Flexural modulus

The flexural modulus was measured using a specimen prepared by injection molding, in a machine direction (MD) in accordance with ASTM D790.

(5) Tensile strength at break and tensile elongation at break

The tensile strength at break and tensile elongation at break were measured in accordance with JIS K 6301. The measurement was carried out using a dumbbell No.3 prepared from a 2mm thick press sheet for table 1-1 and 1-2 or a 2mm thick injection molded square plate in a machine direction (MD) and in a transverse direction (TD) for table 2 at a tensile rate of 200 mm/min.

(6) Stress crack resistance

The stress crack resistance (ESCR) was measured using a specimen (13 x 38 x 3 mm notched) prepared from a 3 mm thick press sheet and a 1% Igepal aqueous solution and a 100% stock solution (Igepal CO-630, manufactured by Gokyo trading Co., Ltd.) at 50°C in accordance with a vent strip method (ASTM D1698).

(7) Sag deformation test

One end of a specimen having a size of 3 mm x 20 mm x 100 mm prepared from a 3 mm thick injection molded plate was kept (one end size 70 mm) and allowed to stand in an oven heated at a predetermined temperature for 3 hr, and thereafter, the sagged quantity of the specimen was measured.

(8) Heat resistance test

The heat resistance test was carried out in accordance with JIS K7212. Specifically, a dumbbell No.3 specimen defined in JIS K 6301 prepared from an injection molded plate was put and suspended in an oven at 120°C for 100 hr, and the change of the appearance of dumbbell specimen was measured. The dumbbell having a sag deformation and/or weight change of not more than 5% was defined as "A", and one having a sag deformation and/or weight change of over 5% was defined as "B".

Furthermore, after the test, the tensile strength at break and elongation were measured with regard to the dumbbell specimen in the same manner as the above test (5). After the heat resistance test, when the dumbbell specimen had a tensile strength at break and elongation in MD and TD directions of not less than 80% of those before the heat resistance test, it was defined as "A", and when the dumbbell specimen had a tensile strength at break and elongation of not more than 80%, it was defined as "B".

(9) Appearance of injection molded article

The appearance of a 3 mm thick injection molded plate was visually observed. When a plate is free from occurrence of peeling, short shot or sink and has good appearance, it was defined as "A", and when a plate has no good appearance caused by occurrence of peeling, short shot or sink, it was defined as "B".

(10) Adhesion with paint

A 150 mm x 80 mm x 2 mm injection molded plate was cleaned with white gasoline to be defatted, and thereon, as a primer, a thinner solution of UNISTOLE P401A manufactured by MITSUI CHEMICALS Co., Ltd. was spray-coated and dried at room temperature (23°C/ 60% relative humidity) for 10 min. Thereafter, a two-component polyurethane resin paint (SOFLEX #260, #360, manufactured by KANSAI PAINT Co., Ltd.) was applied with an air spray, dried at room temperature for 10 min and then dried with heating at 80°C for 30 min.
With regard to the adhesion with the paint, after 24 hours from the treatment, the adhesion performance was evaluated by a cross-cut peeling test using a cellophane tape (Trade Mark). In the cross-cut peeling test for evaluating the adhesion performance, it is desired that none of the peeling should be observed, for the sake of attaining the object of the present invention.

Examples 1 to 9 and Comparative Examples 1 to 7

The components used in Examples and Comparative Examples are as follows. The melt viscosity (JAI 7-1991) is a value measured at 80°C using a Brook Field Viscometer 5XLVDV-II+ (manufactured by US Brook Field Engineering Laboratories).

Component (A)

(a-1):Ethylene/vinyl acetate copolymer
vinyl acetate content 19 % by weight
MFR (JIS K7210-1999, 190°C, 2160 g load) 15 g/10 min
(a-2):Ethylene/vinyl acetate copolymer
vinyl acetate content 33 % by weight
MFR (JIS K7210-1999, 190°C, 2160 g load) 14 g/10 min
(a-3):Ethylene/vinyl acetate copolymer
vinyl acetate content 41 % by weight
MFR (JIS K7210-1999, 190°C, 2160 g load) 65 g/10 min

Component (B)

(b-1):three-component propylene random copolymer
propylene content 93.5 mol%
ethylene content 3 mol%
butene content 3.5 mol%
Melt viscosity (JAI 7-1991, 180°C) not less than 1,000,000 mPa·s
MFR (ASTM D1238, 230°C, 2160 g load) 7.2 g/10 min
(b-2):three-component propylene random copolymer
propylene content 95.5 mol%
ethylene content 2 mol%
butene content 2.5 mol%
Melt viscosity (JAI 7-1991, 180°C) not less than 1,000,000 mPa·s
MFR (ASTM D1238, 230°C, 2160 g load) 7.4 g/10 min
(b-3):two-component propylene random copolymer

propylene content 96.0 mol%

ethylene content 4.0 mol%

Melt viscosity (JAI 7-1991, 180°C) not less than 1,000,000 mPa·s MFR (ASTM D1238, 230°C, 2160 g load) 9 g/10 min

(b-4):two-component propylene block copolymer

propylene content 90.0 mol%

ethylene content 10.0 mol%

Melt viscosity (JAI 7-1991, 180°C) not less than 1,000,000 mPa·s

MFR (ASTM D1238, 230°C, 2160 g load) 10 g/10 min (b-5):propylene homopolymer

Melt viscosity (JAI 7-1991, 180°C) not less than 1,000,000 mPa·s

MFR (ASTM D1238, 230°C, 2160 g load) 9 g/10 min

Organic peroxide (C)

(c-1):2,5-dimethyl-2,5-di-(t-butylperoxy)hexane (Trade Name; Luperox 101 manufactured by ATOFINA YOSHITOMI, Ltd.)

Inorganic compound (F)

(f-1): aluminum hydroxide (Trade Name; HYZILIDE H-42S manufactured by Showa Denko Co., Ltd.)

Cross-linking co-agent (G)

(g-1):triallyl isocyanurate (Trade Name; TAIC, manufactured by Tokyo Kasei Kogyo Co., Ltd. )

Antioxidant (H)

(h-1): tetrakis{methylene-3-(3',5'-di-t-butyl -4'-hydroxyphenyl) propionate}methane (Trade Name; IRGANOX 101 manufactured by Ciba Speciality Chemicals Co., Ltd.)

In each example, the above components were fed in the proportion as shown in Table 1 into a Henschel mixer and pre-mixed for 60 sec in the Henschel mixer. The mixture was fed into a 40 mmφ single screw extruder equipped with a pelletizer [Nakatani Kikai Co., Ltd. No. VSK 40 m/m], melt-blended in the following extrusion conditions (or melt blend conditions), and pellets of the polymer composition, in which at least one of the component (A) and the component (B) was partially (or highly) cross-linked, were obtained.

The extrusion conditions in the single screw extruder were as follows:

L/D: 28

Barrel temperature (°C):

C1=180, C2=200, C3=200, C4=200, A=200, D=200

Number of revolutions of screw: 40 rev/min

Rate of extrusion: 8 kg/h

Retention time: 80 sec

Mixing zone temperature: 200°C

The melt flow rate (MFR; JIS K7210-1999, 190°C, 2160 g load) and MFR reduction rate of the resulting polymer composition are shown in Table 1.

The resulting pelletized polymer composition was made into a 150 mm sheet by a compression molding machine with temperature set at 200°C.

In Example 9, the polymer composition was prepared using the components (a-2), (b-1) and (c-1) in the above procedure. Thereafter, 50 parts by weight of the inorganic compound (f-1) and 0.2 part by weight of the antioxidant (h-1) were added to the polymer composition and melt-blended using a pressure kneader at a processing temperature of 160°C and subjected to sheet forming by a ro11. Successively, using the polymer composition thus prepared, a 150 mm sheet was formed by a compression molding machine with temperature set at 160°C.

With regard to the press sheet thus prepared, stiffness, hardness (Shore D), tensile strength at break and tensile elongation at break were measured in accordance with the above methods. Further, the heat resistance test was carried out in accordance with the above method. The results are shown in Table 1.

Table 1-1

| | Example | | | | | | |
|---|---|---|---|---|---|---|---|
| | 1* | 2* | 3* | 4* | 5* | 6* | 9* |
| Blend proportion [wt part] | | | | | | | |
| a-1 | 70 | 70 | 70 | | | | |
| a-2 | | | | | | | 80 |
| a-3 | | | | | | 70 | |
| b-1 | 30 | | | | 30 | 30 | 20 |
| b-2 | | 30 | | | | | |
| b-3 | | | 30 | | | | |
| b-4 | | | | 30 | | | |
| b-5 | | | | | | | |
| c-1 | 0.05 | 0.05 | 0.05 | 0.05 | 0.05 | 0.05 | 0.07 |
| f-1 | | | | | | | 50 |
| g-1 | 0.05 | 0.05 | 0.05 | 0.05 | 0.05 | 0.05 | |
| h-1 | | | | | | | 0.2 |
| MFR of composition [g/10min] | 0.83 | 0.57 | 0.78 | 0.29 | 0.19 | 1.2 | 0.85 |
| MFR reduction rate [%] | 92 | | 93 | 97 | 98 | 89 | |
| Stiffness [MPa] | 136 | 108 | 119 | 112 | 41.5 | 15.3 | 45 |
| Tensile elongation at break [%] | 582 | 508 | 276 | 218 | 645 | 652 | 723 |
| Tensile strength at break [MPa] | 14.3 | 11.1 | 7.9 | 5.7 | 17.8 | 5.1 | 17 |
| Hardness (Shore D) | 45 | 44 | 45 | 43 | 31 | 24 | 34 |
| Heat resistance | A | A | A | A | A | A | A |
| *Not a composition of the present invention | | | | | | | |

Table 1-2

| | Comparative Example | | | | | |
|---|---|---|---|---|---|---|
| | 1 | 2 | 3 | 4 | 5 | 6 |
| Blend proportion [wt part] on [wt part] | | | | | | |
| a-1 | 70 | 70 | 70 | 70 | 70 | 100 |
| a-2 | | | | | | |
| a-3 | | | | | | |
| b-1 | 30 | | | | | |
| b-2 | | | | | | |
| b-3 | | 30 | | | | |

(continued)

| Blend proportion [wt part] on [wt part] | | | | | | |
|---|---|---|---|---|---|---|
| b-4 | | | 30 | | | |
| b-5 | | | | 30 | 30 | |
| c-1 | | | | | 0.05 | |
| f-1 | | | | | | |
| g-1 | | | | | 0.05 | |
| h-1 | | | | | | |
| MFR of composition [g/10min] | 9.78 | 10.7 | 10.5 | 10.5 | 0.61 | 15 |
| MFR reduction rate [%] | | | | | 94 | |
| Stiffness [MPa] | 74 | 80 | 83 | 104 | 118 | 35 |
| Tensile elongation at break [%] | 168 | 140 | 152 | 88 | 105 | 800 |
| Tensile strength at break [MPa] | 5.0 | 4.9 | 4.6 | 5.6 | 7.5 | 13 |
| Hardness (Shore D) | 41 | 39 | 41 | 41 | 47 | 32 |
| Heat resistance | B | B | B | B | A | B |

Examples 10 and 11, and Comparative Examples 8 and 9

The components used in Examples and Comparative Examples are as follows.

Component (A1)

(a-6): Ethylene/vinyl acetate copolymer
vinyl acetate content 10 % by weight
MFR(JIS K7210-1999, 190°C, 2160 g load) 20 g/10 min

Component (A2)

(a-7): Ethylene/vinyl acetate copolymer
vinyl acetate content 33 % by weight
MFR(JIS K7210-1999, 190°C, 2160 g load) 31 g/10 min

Component (B)

(b-6): three-component propylene random copolymer
propylene content 93.5 mol%
ethylene content 3 mol%
butene content 3.5 mol%
Melt viscosity (JAI 7-1991, 180°C) not less than 1,000,000 mPa·s
MFR(ASTM D 1238, 230°C, 2160 g load) 7.2 g/10 min

Organic peroxide (C)

(c-1):2,5-dimethyl-2,5-di-(t-butylperoxy)hexane (Trade Name; Luperox 101 manufactured by ATOFINA YOSHITOMI, Ltd.)

In each example, the above components were fed in the proportion as shown in Table 2 into a Henschel mixer and pre-mixed for 60 sec in the Henschel mixer. The mixture was fed into a 40 mmφ single screw extruder equipped with a pelletizer [Nakatani Kikai Co., Ltd. No. VSK 40 m/m], melt-blended in the following extrusion conditions (or melt blending conditions), and pellets of the polymer composition, in which at least one of the component (A1), the component (A2) and the component (B) was partially (or highly) cross-linked, were obtained.

The extrusion conditions in the single screw extruder were as follows:

L/D: 28
Barrel temperature (°C):
C1=180, C2=200, C3=200, C4=200, A=200, D=200
Number of revolutions of screw: 40 rev/min
Rate of extrusion: 8 kg/h
Retention time: 80 sec
Mixing zone temperature: 200°C

The melt flow rate of the resulting polymer composition were evaluated in accordance with the above methods. The results are shown in Table 2.

The resulting pelletized polymer composition was made into an injection molded plate using an injection molding machine (manufactured by Toshiba Kikai Co., Ltd. IS-100E ) with the processing temperature of 200°C.

With regard to each of the plates thus prepared, the hardness, flexural modulus, tensile properties, sag deformation, heat resistance test, appearance and adhesion with paint were tested, measured or evaluated in accordance with the above methods. Concerning to the stress crack resistance, a 3 mm thick sheet was prepared by a compression molding machine set at 200°C and the test was carried out using the sheet in accordance with the above method. The results are shown in Table 2.

Table 2

| | | | Example | | Compar. Ex. | |
|---|---|---|---|---|---|---|
| | | | 10 | 11 | 8 | 9 |
| Blend proportion [wt part] | | a-6 | 45 | 45 | 70 | 90 |
| | | a-7 | 25 | 25 | - | 10 |
| | | b-6 | 30 | 30 | 30 | - |
| | | c-1 | 0.02 | 0.10 | 0.02 | |
| Vinyl acetate content [% by weight] | | | 12.8 | 12.8 | 7.0 | 12.3 |
| MFR of composition [g/10min] | | | 8 | 2 | 10 | 19 |
| MFR reduction rate [%] | | | 39 | 85 | 23 | |
| Flexural modulus [MPa] | | | 80 | 80 | 120 | 70 |
| Tensile strength at break | | MD[MPa] | 14 | 13 | 12 | 9 |
| | | TD[MPa] | 14 | 15 | 10 | 13 |
| Tensile elongation at break | | MD[%] | 500 | 450 | 400 | 430 |
| | | TD[%] | 670 | 730 | 450 | 790 |
| Hardness | | Shore A | 45 | 44 | 48 | 40 |
| | | Shore B | 95 | 95 | 96 | 90 |
| ESCR [h] | | Igepal 1% | 500< | 500< | 200 | 500< |
| | | Igepal 100% | 3 | 500< | 1 | 1 |

(continued)

| | | Example | | Compar. Ex. | |
|---|---|---|---|---|---|
| Deformation induced by gravity [mm] | 80°C | 1 | 0 | 0 | 51 |
| | 90°C | 3.5 | 2 | 1 | 80 |
| | 100°C | 6 | 3 | 1 | * |
| Heat resistance | Sag deformation | A | A | A | B |
| | Tensile properties | A | A | A | * |
| Appearance of injection molded article | | A | A | A | A |
| Adhesion with paint | | 0 | 0 | 100 | 0 |
| *:unmeasurable | | | | | |

As shown in Table 2, in Comparative Example 8, the component (a-7) was not blended so that the polymer composition had a low vinyl acetate content and inferior adhesion performance with paint. In Comparative Example 9, the component (B) and the component (C) were not blended so that the effect of the dynamic heat-treatment was not observed and the composition had inferior heat resistance. On the other hand, in Examples 10 and 11, the appearance, heat resistance and adhesion with paint are good.

**Claims**

1. A polymer composition comprising:

   30 to 75% by weight of an ethylene-vinyl acetate copolymer (A1) containing units derived from vinyl acetate in an amount of not less than 6% by weight and less than 20% by weight,
   5 to 30% by weight of an ethylene-vinyl acetate copolymer (A2) containing units derived from vinyl acetate in an amount of not less than 20% by weight and not more than 45% by weight, and
   10 to 50 % by weight of a resin (B) having a melt viscosity (JAI 7-1991) at 180°C of over 10,000 mPa•s and comprising a two or more-component propylene copolymer containing 0.1 to 20% by mol of units derived from α-olefins other than propylene, or a blend of the two or more-component propylene copolymer and a propylene homopolymer,
   wherein at least one of the components (A1), (A2) and (B) is partially or completely cross-linked.

2. A polymer composition, which is at least partially cross-linked, obtainable by dynamically heat-treating:

   30 to 75% by weight of an ethylene-vinyl acetate copolymer (A1) containing units derived from vinyl acetate in an amount of not less than 6% by weight and less than 20% by weight,
   5 to 30% by weight of an ethylene-vinyl acetate copolymer (A2) containing units derived from vinyl acetate in an amount of not less than 20% by weight and not more than 45% by weight, and
   10 to 50 % by weight of a resin (B) having a melt viscosity (JAI 7-1991) at 180°C of over 10,000 mPa•s and comprising a two or more-component propylene copolymer containing 0.1 to 20% by mol of units derived from α-olefins other than propylene, or a blend of the two or more-component propylene copolymer and a propylene homopolymer,
   in the presence of an organic peroxide (C) in an amount of from 0.001 to 4 parts by weight based on 100 parts by weight of the total amount of the components (A1), (A2) and (B).

3. A polymer composition according to claim 1 or claim 2, which contains the units derived from vinyl acetate in an amount of not less than 8% by weight based on the total polymer composition.

4. A polymer composition according to any one of claims 1 to 3, wherein the resin (B) has a melting point of not lower than 120°C and a melt flow rate (ASTM D 1238, 230°C, 2160 g load) of from 1 to 50 g/10 min.

5. A polymer composition according any one of claims 1 to 4, which has a melt flow rate (JIS K7210-1999, 190°C, 2160 g load) of from 1 to 20 g/10 min.

6. A molded article, which is producable from a polymer composition as defined in any one of claims 1 to 5.

7. A molded article according to claim 6, which has a flexural modulus (ASTM D 790) of not less than 70 MPa.

8. A molded article according to claim 6, which has a tensile strength at break (JIS K 6301) of not less than 10 MPa and tensile elongation at break (JIS K 6301) of not less than 400 %.

9. A dumbell No 3 specimen which is standardised in JIS K 6301, and which is producable from a polymer composition as defined in any one of claims 1 to 5.

10. A dumbbell No 3 specimen according to claim 9, which has a sag deformation of not more than 5% after suspending in an oven at 120°C for 100 hours.

11. A dumbbell No 3 specimen according to claim 9, which is capable of keeping 80% or more of tensile strength at break and tensile elongation at break (JIS K 6301) before heat resistance test, even after suspending in an oven at 120°C for 100 hours.

12. A process for producing a polymer composition which process comprises dynamically heat-treating:

30 to 75% by weight of an ethylene-vinyl acetate copolymer (A1) containing units derived from vinyl acetate in an amount of not less than 6% by weight and less than 20% by weight,
5 to 30% by weight of an ethylene-vinyl acetate copolymer (A2) containing units derived from vinyl acetate in an amount of not less than 20% by weight and not more than 45% by weight, and
10 to 50 % by weight of a resin (B) having a melt viscosity (JAI 7-1991) at 180°C of over 10,000 mPa•s and comprising a two or more-component propylene copolymer containing 0.1 to 20% by mol of units derived from α-olefins other than propylene, or a blend of the two or more-component propylene copolymer and a propylene homopolymer,
in the presence of an organic peroxide (C) in an amount of from 0.001 to 4 parts by weight based on 100 parts by weight of the total amount of the components (A1), (A2) and (B).

13. A molded article according to claim 6 which is suitable for automobile exterior trim and is obtainable by molding the polymer composition as defined in any one of claims 1 to 5.

**Patentansprüche**

1. Polymerzusammensetzung, umfassend:

30 bis 75 Gew.-% eines Ethylen-Vinylacetat-Copolymers (A1), das von Vinylacetat abgeleitete Einheiten in einer Menge von nicht weniger als 6 Gew.-% und weniger als 20 Gew.-% enthält,
5 bis 30 Gew.-% eines Ethylen-Vinylacetat-Copolymers (A2), das von Vinylacetat abgeleitete Einheiten in einer Menge von nicht weniger als 20 Gew.-% und nicht mehr als 45 Gew.-% enthält, und
10 bis 50 Gew.-% eines Harzes (B), das eine Schmelzviskosität (JAI 7-1991) bei 180°C von mehr als 10.000 mPa·s aufweist und das ein Zwei- oder Mehrkomponenten-Propylencopolymer, welches 0,1 bis 20 Mol.-% an Einheiten enthält, die von α-Olefinen, die nicht Propylen sind, abgeleitet sind, oder eine Mischung des Zwei- oder Mehrkomponenten-Propylencopolymers und eines Propylenhomopolymers umfasst,
wobei mindestens eine der Komponenten (A1), (A2) und (B) teilweise oder völlig quervernetzt ist.

2. Polymerzusammensetzung, die wenigstens teilweise quervernetzt ist und die erhältlich ist durch dynamische Wärmebehandlung von:

30 bis 75 Gew.-% eines Ethylen-Vinylacetat-Copolymers (A1), das von Vinylacetat abgeleitete Einheiten in einer Menge von nicht weniger als 6 Gew.-% und weniger als 20 Gew.-% enthält,
5 bis 30 Gew.-% eines Ethylen-Vinylacetat-Copolymers (A2), das von Vinylacetat abgeleitete Einheiten in einer Menge von nicht weniger als 20 Gew.-% und nicht mehr als 45 Gew.-% enthält, und
10 bis 50 Gew.-% eines Harzes (B), das eine Schmelzviskosität (JAI 7-1991) bei 180°C von mehr als 10.000 mPa·s aufweist und das ein Zwei- oder Mehrkomponenten-Propylencopolymer, welches 0,1 bis 20 Mol.-% an Einheiten enthält, die von α-Olefinen, die nicht Propylen sind, abgeleitet sind, oder eine Mischung des Zwei- oder Mehrkomponenten-Propylencopolymers und eines Propylenhomopolymers umfasst,
in Gegenwart eines organischen Peroxids (C) in einer Menge von 0,001 bis 4 Gewichtsteilen, basierend auf 100 Gewichtsteilen der Gesamtmenge der Komponenten (A1), (A2) und (B).

**3.** Polymerzusammensetzung gemäß Anspruch 1 oder Anspruch 2, die die von Vinylacetat abgeleiteten Einheiten in einer Menge von nicht weniger als 8 Gew.-% enthält, basierend auf der Gesamtpolymerzusammensetzung.

**4.** Polymerzusammensetzung gemäß einem der Ansprüche 1 bis 3, wobei das Harz (B) einen Schmelzpunkt von nicht weniger als 120°C und einen Schmelzflussindex (ASTM D 1238, 230°C, 2160 g Belastung) von 1 bis 50 g/10 min aufweist.

**5.** Polymerzusammensetzung gemäß einem der Ansprüche 1 bis 4, die einen Schmelzflussindex (JIS K7210-1999, 190°C, 2160 g Belastung) von 1 bis 20 g/10 min aufweist.

**6.** Formkörper, der aus einer Polymerzusammensetzung herstellbar ist, wie sie in einem der Ansprüche 1 bis 5 definiert ist.

**7.** Formkörper gemäß Anspruch 6, der ein Biegemodul (ASTM D 790) von nicht weniger als 70 MPa aufweist.

**8.** Formkörper gemäß Anspruch 6, der eine Reißfestigkeit (JIS K 6301) von nicht weniger als 10 MPa und eine Reißdehnung (JIS K 6301) von nicht weniger als 400% aufweist.

**9.** Hantel Nr. 3-Prüfkörper, wie er in JIS K 6301 normiert ist und der aus einer Polymerzusammensetzung herstellbar ist, wie sie in einem der Ansprüche 1 bis 5 definiert ist.

**10.** Hantel Nr. 3-Prüfkörper gemäß Anspruch 9, der ein Durchsacken ("sag deformation") von nicht mehr als 5% nach Aufhängen in einem Ofen bei 120°C für 100 Stunden zeigt.

**11.** Hantel Nr. 3-Prüfkörper gemäß Anspruch 9, der in der Lage ist, 80% oder mehr der Reißfestigkeit und Reißdehnung (JIS K 6301) vor einem Wärmebeständigkeitstest zu bewahren, selbst nach Aufhängen in einem Ofen bei 120°C für 100 Stunden.

**12.** Verfahren zur Herstellung einer Polymerzusammensetzung, umfassend eine dynamische Wärmebehandlung von:

30 bis 75 Gew.-% eines Ethylen-Vinylacetat-Copolymers (A1), das von Vinylacetat abgeleitete Einheiten in einer Menge von nicht weniger als 6 Gew.-% und weniger als 20 Gew.-% enthält,
5 bis 30 Gew.-% eines Ethylen-Vinylacetat-Copolymers (A2), das von Vinylacetat abgeleitete Einheiten in einer Menge von nicht weniger als 20 Gew.-% und nicht mehr als 45 Gew.-% enthält, und
10 bis 50 Gew.-% eines Harzes (B), das eine Schmelzviskosität (JAI 7-1991) bei 180°C von mehr als 10.000 mPa·s aufweist und das ein Zwei- oder Mehrkomponenten-Propylencopolymer, welches 0,1 bis 20 Mol.-% an Einheiten enthält, die von $\alpha$-Olefinen, die nicht Propylen sind, abgeleitet sind, oder eine Mischung des Zwei- oder Mehrkomponenten-Propylencopolymers und eines Propylenhomopolymers umfasst,
in Gegenwart eines organischen Peroxids (C) in einer Menge von 0,001 bis 4 Gewichtsteilen, basierend auf 100 Gewichtsteilen der Gesamtmenge der Komponenten (A1), (A2) und (B).

**13.** Formkörper gemäß Anspruch 6, der für Automobil-Außenverkleidungsteile geeignet ist und durch Formen der Polymerzusammensetzung erhältlich ist, wie sie in einem der Ansprüche 1 bis 5 definiert ist.

**Revendications**

**1.** Composition de polymères, qui comprend :

- 30 à 75 % en poids d'un copolymère (A1) d'éthylène et d'acétate de vinyle, qui comporte au moins 6 % en poids et moins de 20 % en poids de motifs dérivés de l'acétate de vinyle ;
- 5 à 30 % en poids d'un copolymère (A2) d'éthylène et d'acétate de vinyle, qui comporte au moins 20 % en poids et au plus 45 % en poids de motifs dérivés de l'acétate de vinyle ;
- et 10 à 50 % en poids d'une résine (B) dont la viscosité à l'état fondu (norme JAI 7-1991) vaut plus de 10.000 mPa.s à 180 °C et qui comprend un copolymère de propylène à deux composants ou plus, contenant de 0,1 à 20 % en moles de motifs dérivés d'alpha-oléfines autres que du propylène, ou un mélange d'un tel copolymère de propylène à deux composants ou plus et d'un homopolymère de propylène ;

et dans laquelle au moins l'un des constituants (A1), (A2) et (B) se trouve partiellement ou complètement réticulé.

2. Composition de polymères, qui est au moins partiellement réticulée et que l'on peut obtenir par traitement thermique dynamique des constituants suivants :

- 30 à 75 % en poids d'un copolymère (A1) d'éthylène et d'acétate de vinyle, qui comporte au moins 6 % en poids et moins de 20 % en poids de motifs dérivés de l'acétate de vinyle ;
- 5 à 30 % en poids d'un copolymère (A2) d'éthylène et d'acétate de vinyle, qui comporte au moins 20 % en poids et au plus 45 % en poids de motifs dérivés de l'acétate de vinyle ;
- et 10 à 50 % en poids d'une résine (B) dont la viscosité à l'état fondu (norme JAI 7-1991) vaut plus de 10.000 mPa.s à 180 °C et qui comprend un copolymère de propylène à deux composants ou plus, contenant de 0,1 à 20 % en moles de motifs dérivés d'alpha-oléfines autres que du propylène, ou un mélange d'un tel copolymère de propylène à deux composants ou plus et d'un homopolymère de propylène ;

en présence d'un peroxyde organique (C), employé à raison de 0,001 à 4 parties en poids pour 100 parties en poids, au total, des constituants (A1), (A2) et (B).

3. Composition de polymères, conforme à la revendication 1 ou 2, qui comporte des motifs dérivés de l'acétate de vinyle en une quantité qui représentent au moins 8 % du poids total de la composition de polymères.

4. Composition de polymères, conforme à l'une des revendications 1 à 3, dans laquelle la résine (B) présente un point de fusion d'au moins 120 °C et un indice de fluidité à chaud (norme ASTM D-1238, 230 °C, charge de 2160 g) de 1 à 50 g/10 min.

5. Composition de polymères, conforme à l'une des revendications 1 à 4, qui présente un indice de fluidité à chaud (norme JIS K7210-1999, 190 °C, charge de 2160 g) de 1 à 20 g/10 min.

6. Pièce moulée, que l'on peut produire à partir d'une composition de polymères conforme à l'une des revendications 1 à 5.

7. Pièce moulée conforme à la revendication 6, qui présente un module en flexion (norme ASTM D-790) d'au moins 70 MPa.

8. Pièce moulée conforme à la revendication 6, qui présente une résistance à la rupture en traction (norme JIS K-6301) d'au moins 10 MPa et un allongement à la rupture en traction (norme JIS K-6301) d'au moins 400 %.

9. Eprouvette en forme d'haltère N° 3 d'après la norme JIS K-6301, que l'on peut produire à partir d'une composition de polymères conforme à l'une des revendications 1 à 5.

10. Eprouvette en forme d'haltère N° 3, conforme à la revendication 9, qui présente, après être restée suspendue pendant 100 heures dans un four à 120 °C, une déformation en fléchissement d'au plus 5 %.

11. Eprouvette en forme d'haltère N° 3, conforme à la revendication 9, qui, même après être restée suspendue pendant 100 heures dans un four à 120 °C, est capable de conserver, à un degré d'au moins 80 %, sa résistance à la rupture en traction et son allongement à la rupture en traction (norme JIS K-6301).

12. Procédé de production d'une composition de polymères, lequel procédé comporte le fait de soumettre à un traitement thermique dynamique les constituants suivants :

- 30 à 75 % en poids d'un copolymère (A1) d'éthylène et d'acétate de vinyle, qui comporte au moins 6 % en poids et moins de 20 % en poids de motifs dérivés de l'acétate de vinyle ;
- 5 à 30 % en poids d'un copolymère (A2) d'éthylène et d'acétate de vinyle, qui comporte au moins 20 % en poids et au plus 45 % en poids de motifs dérivés de l'acétate de vinyle ;
- et 10 à 50 % en poids d'une résine (B) dont la viscosité à l'état fondu (norme JAI 7-1991) vaut plus de 10.000 mPa.s à 180 °C et qui comprend un copolymère de propylène à deux composants ou plus, contenant de 0,1 à 20 % en moles de motifs dérivés d'alpha-oléfines autres que du propylène, ou un mélange d'un tel copolymère de propylène à deux composants ou plus et d'un homopolymère de propylène ;

en présence d'un peroxyde organique (C), employé à raison de 0,001 à 4 parties en poids pour 100 parties en poids, au total, des constituants (A1), (A2) et (B).

13. Pièce moulée conforme à la revendication 6, appropriée en tant que garniture extérieure d'automobile et accessible par moulage d'une composition de polymères conforme à l'une des revendications 1 à 5.

## REFERENCES CITED IN THE DESCRIPTION

**Patent documents cited in the description**

- JP 1026616 B
- JP 2001031801 A
- US 6258862 B

**Non-patent literature cited in the description**

- *European Polymer Journal,* 1992, vol. 28 (11), 1451-8
- *Polymer Engineering and Science,* 1992, vol. 32 (15), 998-1003
- *Journal of Materials Science,* 1987, vol. 22 (9), 3209-16